# EUROPÄISCHE PATENTSCHRIFT

(11) **EP 1 164 066 B1**
(45) Veröffentlichungstag und Bekanntmachung des Hinweises auf die Patenterteilung: **04.08.2004**
(21) Anmeldenummer: 00120239.9
(22) Anmeldetag: 27.09.2000
(51) Int. Cl.: B60T 11/32, B60T 13/68, B60T 13/66, B60T 17/22

(54) **Verfahren und Vorrichtung zur Bremsung eines Lastkraftwagens mit Anhänger oder Auflieger**
Method and device for braking of a commercial vehicle with trailer or semi-trailer
Procédé et dispositif pour le freinage d'un camion avec remorque où semi-remorque

(30) Priorität: 17.06.2000 DE 10029900
(43) Veröffentlichungstag der Anmeldung: 19.12.2001
(73) Patentinhaber: MAN Nutzfahrzeuge Aktiengesellschaft, 80976 München (DE)
(72) Erfinder: Kolland, Wolfgang Dipl.-Ing., 81245 München (DE)

(56) Entgegenhaltungen:
- EP-A- 0 830 997
- EP-A- 0 976 635
- EP-A- 1 038 747
- DE-A- 19 835 638
- DE-C- 19 649 498

## Beschreibung

Die Erfindung betrifft ein Verfahren und eine Vorrichtung nach dem Oberbegriff des Ansprüche 1 und 2.

### Bemerkungen zur Beschreibung

- für den Anhänger-/Auflieger wird nur Anhänger genannt,
- Betriebsbremsanlage (BBA) meint die Anlage, die mit der Reibungsbremse des Zugwagens und dem Bremspedal in Wirkverbindung steht,
- es wird eine elektrisch/elektronisch geregelte Bremsanlage beschrieben, was natürlich sinngemäß auch für eine pneumatisch geregelte Bremsanlage gilt,
- elektrisch/elektronisch geregelte Bremssysteme benötigen pneumatische Redundanzkreise, die im Text nicht beschrieben und in der Zeichnung nicht eingezeichnet sind,
- der Anhängersteuer-/Anhängerversorgungskreis wird auch Kr3 genannt.

Bremsanlagen in Lastkraftwagen, die für Anhängerbetrieb vorgesehen sind, weisen zusätzlich zu den gesetzlich vorgeschriebenen Druckluftbehältem, das ist je ein Druckluftbehälter je BBA-Bremskreis, noch mindestens einen weiteren Behälter zur Steuerung der Bremsen und Vorratsversorgung der Druckluftvorratsbehälter des Anhängers auf. Dieser weitere Behälter ist nicht vorgeschrieben, aber er hat sich als notwendig herausgestellt, da für den Fall, daß mehrere Bremsvorgänge schnell nacheinander erfolgen, der Anhänger nicht mehr gebremst wird oder mit dem Restdruck in den Behältern im Anhänger die Anhängerbremsen voll beaufschlagt. Der Grund hierfür ist, daß, wenn die Bremsleitung als Druckluftvorratsbehältnis dient, der Druck schnell unter den Schließdruck des Mehrkreisschutzventiles abfällt und dann das Ventil für diesen Kreis im Mehrkreisschutzventil schließt. Unterhalb des Schließdruckes strömt nur wenig Druckluft in einen Brems- oder Steuerkreis, da im Falle einer defekten Leitung nur ein Bruchteil der Druckluft überströmen darf, wie dies bei geöffnetem Ventil im Mehrkreisschutzventil der Fall ist. Diese geringe Überströmmenge befüllt intakte Brems- und Steuerkreise wieder, bis der Schließdruck überschritten wird. Dadurch öffnet das entsprechende Ventil im Mehrkreisschutzventil und Brems- und Steuerkreise werden schnell befüllt. Der untere Schließdruck beträgt etwa 6,5 bar Überdruck und wird versuchsmäßig ermittelt, so daß die gesetzlichen Vorschriften eingehalten werden. Die Systemdrücke von Druckluftbremsanlagen liegen etwa bei 10 bar Überdruck, um Druckluftbehältervolumen einzusparen.

Bei elektronisch gesteuerten Bremsanlagen ist das Bremspedal ein Bremswertgeber, mit dem, aus dem Signal von Pedalweg oder Pedalwinkel, auf elektrischem oder elektronischem Weg, die Steuerventile der Druckregelmodule angesteuert werden. Die Höhe der Eingangsspannung ist dabei das Maß für die Höhe des Bremsmomentes. Der Steuerkreis für die Anhängerbremsanlage erhält das gleiche Steuersignal.

Die Steuerung kann sowohl elektrisch/elektronisch als auch pneumatisch oder gemischt erfolgen. Bei elektrisch/elektronisch gesteuerten Bremsanlagen ist mindestens ein pneumatischer Redundanzkreis erforderlich, falls die elektrische/elektronische Steuerung ausfällt. In allen Fällen ist deshalb eine Druckluft für den Kr3 vorzusehen.

Die Bremsanlagen unterliegen gesetzlichen Auflagen über die Bremswirkung. Eine der Auflagen ist, daß, ohne daß der Luftkompressor Druckluft nachfördern darf, nach 8 Bremsungen mit der restlichen Druckluft eine Fahrzeugverzögerung von 1,35 m/sec² noch erreichbar sein muß. Bei den Bremsvorgängen muß auch der Kr3 für die Anhängerbremse mit Druckluft versorgt werden.

Eine weitere Auflage ist, daß bei Ausfall eines Bremskreises im Zugfahrzeug mit dem noch intakten Bremskreis eine Verzögerung von 2,25 m/sec² erreichbar sein muß.

Aufgabe der Erfindung ist es, Glieder- und Sattelzüge im Bremsverhalten zu verbessern und dies mit möglichst wenig Druckluftvorratsbehältern.

Die Aufgabe wird erfindungsgemäß durch die Merkmale des Verfahrens nach Anspruch 1 und der Vorrichtung nach Anspruch 2 gelöst.

Dadurch, daß das erfindungsgemäß elektrisch/elektronisch oder pneumatisch ansteuerbare und schaltbare Mehrkreisschutzventil (EMSV) eingesetzt ist, kann bei einem Bremsvorgang, wenn der Vorratsdruck unterhalb des Schließdruckes ist, im EMSV Ventile intakter Bremskreise und das Ventil für die Leitung zum Anhänger-steuer- und Versorgungskreis Kr3 geöffnet werden, so daß die Steuer- und Versorgungsdruckluft für den Anhänger aus den Druckluftbehältern der BBA des Zugwagens über das EMSV strömen kann. Dadurch kann der Druckluftbehälter für Kr3 entfallen.

Das EMSV erkennt natürlich, wie das herkömmliche Mehrkreisschutzventil, einen defekten Bremskreis, der durch das EMSV geschlossen, also von dem (den) anderen BBA-Kreis(en) funktionell abgetrennt und bei einem Bremsvorgang nicht geöffnet wird.

Damit das EMSV ansteuerbar ist, muß ein Signalpfad zur elektronischen Bremssteuerung (EBS) oder zum Bordrechner (BR) eingerichtet sein. Das EBS oder der BR erkennen einen Bremsvorgang für die Reibungsbremse. Das EMSV hat eine elektronische Steuereinheit, die die Signale aus dem EBS oder dem BR umsetzt zur Steuerung seiner Magnetventile. Anstatt der Magnetventile können natürlich auch pneumatische Stelleinheiten verwendet werden.

In der Zeichnung ist ein Ausführungsbeispiel der Erfindung schematisch dargestellt.

Es zeigen:
- Fig. 1: die Skizze einer Druckluftbremsanlage,
- Fig. 2: die Skizze des elektronischen Mehrkreisschutzventils EMSV,
- Fig. 3: einen Abfrageplan für die Bremsanlage,
- Fig. 4: die Skizze einer Druckluftbremsanlage im Stand der Technik.

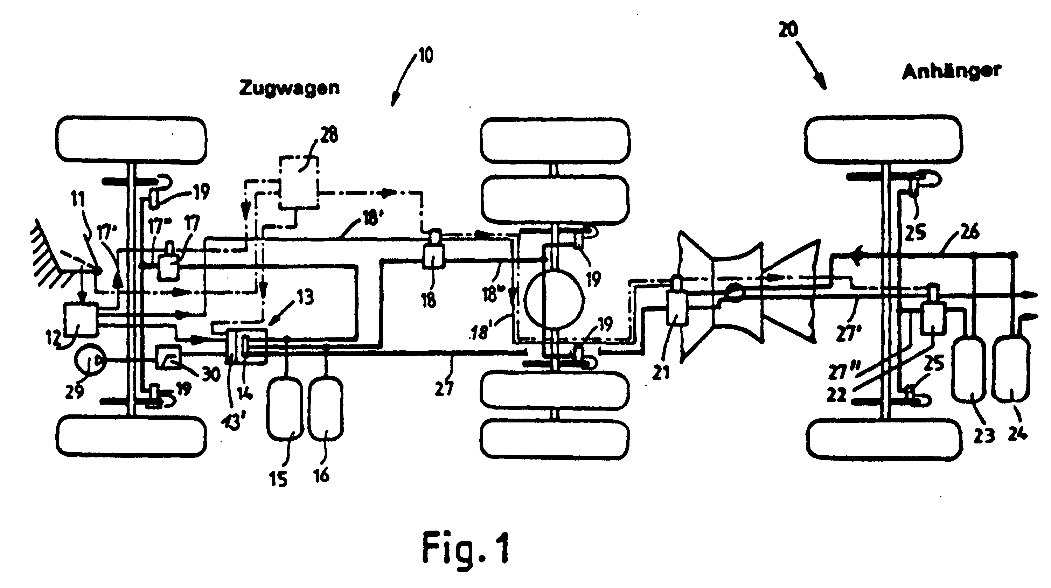

Die Fig. 1 zeigt eine Druckluftbremsanlage 10 für das Zugfahrzeug und die Druckluftbremsanlage 20 für den Anhänger. Über den Bremswertgeber 11 wird ein Signal des Bremswunsches an die elektronische Bremssteuerung EBS 12 oder den Bordrechner BR 28, je nach dem, welche Einrichtung genutzt wird oder vorhanden ist, gegeben. Die EBS 12 bzw. der BR 28, in der Zeichnung die EBS, gibt Signale über die Steuerleitungen 17', 18' für einen Bremsvorgang an die Druckregelmodule 17, 18, die mit der Luft aus den Druckluftvorratsbehältern 15, 16 die Bremskreise 17", 18" des Zugfahrzeuges geregelt beaufschlagen.

Die Signalpfade bei Verwendung eines Bordrechners 28 sind mit Strichpunktlinien eingetragen.

Die Bremsanlage 20 des Anhängers wird vom Zugfahrzeug mit versorgt. Das Druckregelmodul 22 für den Anhänger erhält über das Verteiler-Regelventil 21 das gleiche Signal für den Bremsvorgang, wie die Druckregelmodule 17, 18 des Zugfahrzeuges. Über die Druckluftleitung 27 wird im Verteiler-Regelventil 21 ein Teil der Druckluft für die Befüllung der Druckluftvorratsbehälter 23, 24 über die Druckluftleitung 26 und, wenn ein Bremsvorgang vorliegt, ein Teil als Steuerdruckluft in der Leitung 27' für das Druckregelmodul 22 verwendet. Der Bremskreis 27" im Anhänger erhält die Druckluft für die Beaufschlagung der Bremsen 25 aus den Druckluftvorratsbehältem 23, 24.

Wird der Bremsvorgang eingeleitet, wenn der Systemdruck, z. B. 10 bar Überdruck, erreicht ist, wird über das Steuersignal das Verteiler-Regelventil 21 so gesteuert, daß in der Druckluftleitung 27' das Steuersignal als pneumatisches Signal an das Druckregelmodul 22 weitergegeben wird. Diese Druckluft wird aus der Leitung 27 entnommen, wird aber durch Druckluft aus den Druckluftvorratsbehältern 15, 16 und vom Luftkompressor 29, die über das elektronische Mehrkreisschutzventil EMSV 13 strömt, ergänzt. Das Druckbegrenzungsventil 30 regelt den oberen Systemdruck der Betriebsbremsanlage BBA.

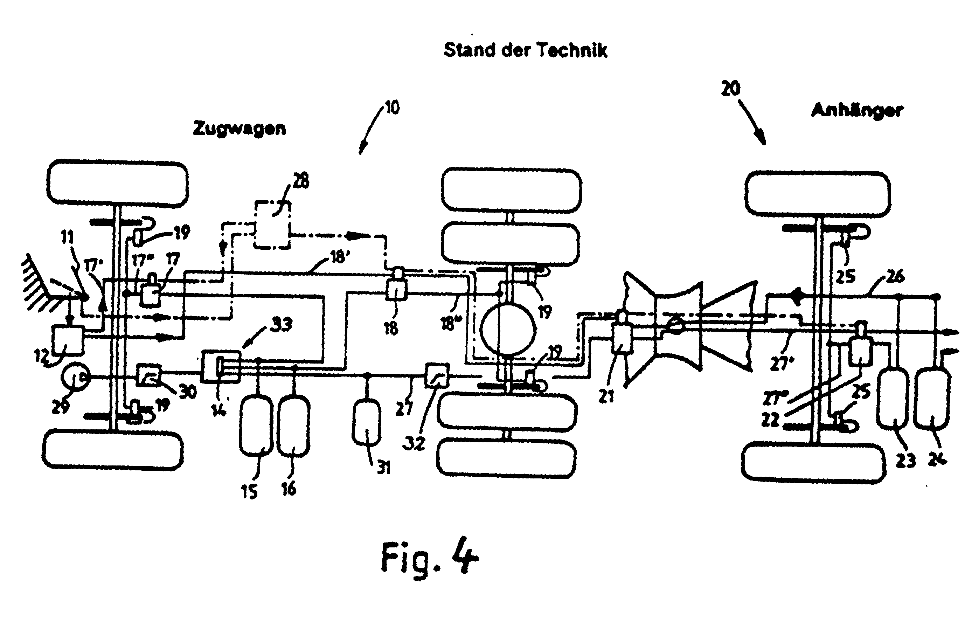

Wenn aber, z. B. durch häufiges Bremsen der Systemdruck unterhalb des Schließdruckes fällt, schließt das EMSV 13, wie das herkömmliche Mehrkreisschutzventil 33 (Fig. 4), seine Ventile und die Luftzufuhr durch den Kompressor 29 in die Druckluftanlagen 10, 20 für Zugwagen und Anhänger ist damit gering. Wenn in diesem Fall kein Druckluftvorratsbehälter 31 (Fig. 4) vorhanden wäre, wäre z. B. nach einem weiteren Bremsvorgang der Anhänger nicht mehr gesteuert bremsbar, da der Druckluftvorrat in der Leitung 27 für einen weiteren Bremsvorgang nicht ausreichen würde.

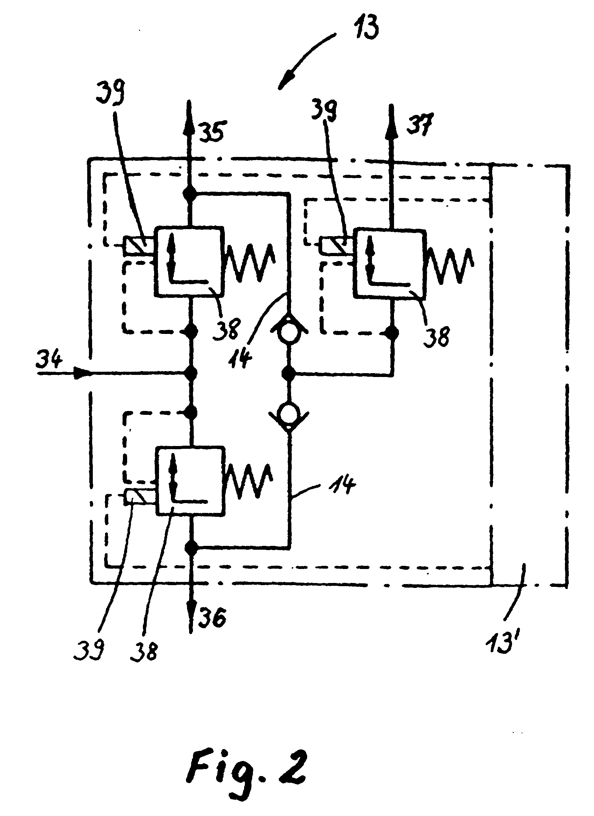

Um den Druckluftvorratsbehälter 31 (Fig. 4) dennoch einsparen zu können, werden erfindungsgemäß, wenn der Druck in den Druckluftvorratsbehältern 15, 16 oder dem Kr3 unter den Sicherungsdruck des EMSV 13 fällt, für einen Bremsvorgang die Ventile 38 (Fig. 2) des EMSV 13 über Magnetschalter 39 geöffnet und es strömt aus den Druckluftvorratsbehältem 15, 16 Druckluft über den Kanal 14 in den Steuer- und Versorgungskreis 27, 27', 26 für die Druckluftanlage 20 des Anhängers. Wenn aber einer der Druckluftkreise 17", 18", Kr3 eine z. B. defekte Leitung hat, bleibt dieser Druckluftkreis geschlossen.

Die beschriebene Schaltung gilt für einen normalen Bremsvorgang, der z. B. zwei bis drei Sekunden andauert. Bei einem länger andauernden Bremsvorgang wird nur für einen zeitlichen Anteil des Bremsvorganges die genannte Schaltung geschaltet, um zu vermeiden, dass durch das Öffnen des EMSV 13 die Druckluftvorratsbehälter 15, 16 z. B. durch einen während des längeren Bremsvorganges plötzlich auftretenden Druckverlust in einem der Bremskreise, völlig entleert werden könnte(n). Durch diese Maßnahme wird erreicht, dass intakte Bremskreise weiterhin bremsbar sind und ein defekter Bremskreis mit dieser Maßnahme nicht mehr mit Druckluft beliefert wird. Der zeitliche Anteil für das Öffnen der Ventile des EMSV 13 ist im Steuergerät des EMSV 13 oder in der EBS 12 oder im Bordrechner 28 eingebbar.

Die Fig. 2 zeigt den Aufbau des elektronischen Mehrkreisschutzventils 13. Durch den Anschluß 34 kommt Druckluft vom Luftkompressor 29. Die Anschlüsse 35, 36 führen zu den Druckluftvorratsbehältem 15, 16 und der Anschluß 37 zum Anhängersteuer- und Anhängerversorgungskreis 27, 27', 26. Die Ventile 38 sind auf den Sicherungsdruck, z. B. 6,5 bar Überdruck, eingestellt. Oberhalb des Sicherungsdruckes kann viel Druckluft passieren, unterhalb wenig. Die Magnetventile 39, gesteuert über z. B. eine elektronische Steuereinheit 13' öffnen bei einem Bremsvorgang und wenn der Sicherungsdruck unterschritten ist, die Ventile 38, so daß Druckluft von den Anschlüssen 35, 36 zurück über den Kanal 14 zum Anschluß 37 strömen kann.

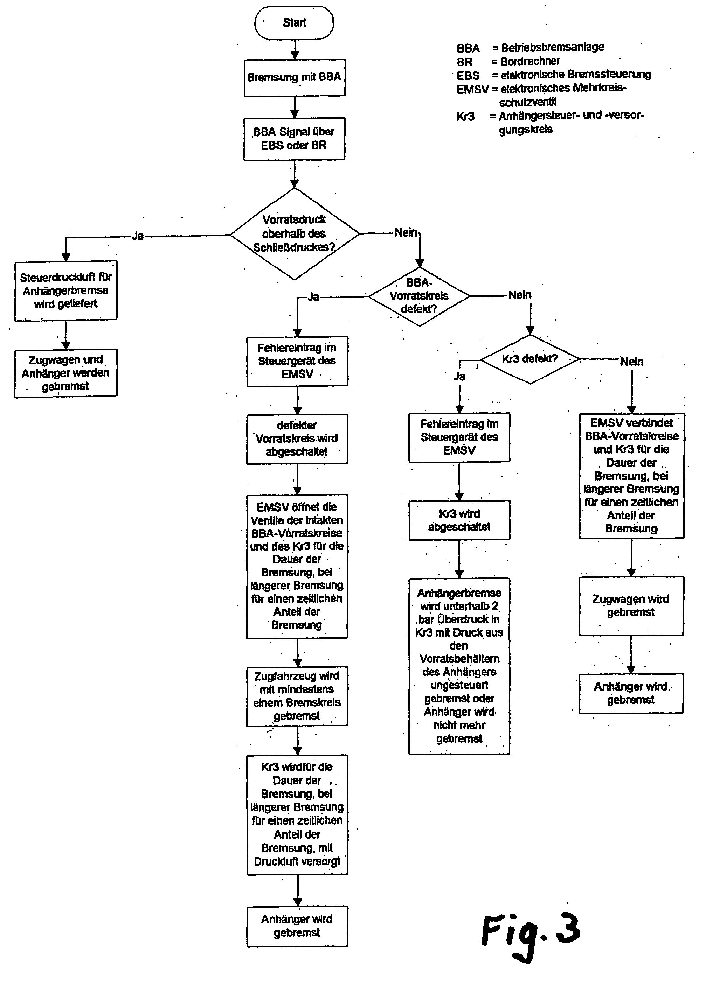

Die Fig. 3 zeigt eine Logikabfrage. Vom elektronischen Bremswertgeber 11 kommt das Signal "Start" für einen Bremsvorgang mit der BBA. Dieses Signal wird in die EBS oder dem BR eingegeben. EBS oder BR fragen "Vorratsdruck oberhalb des Schließdruckes"?. Bei der Antwort "ja" erfolgt die ganz normale Bremsung. Bei der Antwort "nein" wird weitergefragt. "BBA-Vorratskreis defekt"? Bei der Antwort "ja" wird der defekte Vorratskreis abgeschaltet. Das EMSV öffnet die Ventile von intakten Bremskreisen oder, wenn nur ein Bremskreis intakt ist, von diesem und öffnet das Ventil für den Kr3 für die Zeit der Bremsung, damit Druckluft aus dem (den) intakten Bremskreis(en) in den Kr3 strömen kann. Das Zugfahrzeug wird in diesem Fall mit mindestens einem Bremskreis und der Anhänger ohne Bremswirkungsverlust gebremst.

Bei der Frage "BBA-Vorratskreis defekt" Antwort "nein" wird weitergefragt: "Kr3 defekt"?, bei der Antwort "ja" wird Kr3 abgeschaltet. Bei der Antwort "nein" verbindet das EMSV die BBA-Vorratskreise mit dem Kr3 für die Dauer der Bremsung und es strömt Druckluft aus den BBA-Kreisen in den Kr3. Dadurch wird der Zugwagen und der Anhänger gebremst.

Bei einer länger andauernden Bremsung werden für einen zeitlich begrenzten Anteil des Bremsvorganges die Ventile der intakten Bremskreise geöffnet. Damit wird verhindert, dass durch eine während des Bremsvorganges auftretende Leckage in einem vorher intakten Bremskreis die Druckluftvorratsbehälter 15, 16 völlig entleerbar sind. In den noch intakten Bremskreis(en) ist die Druckluft für diesen Bremsvorgang "eingesperrt" und die Bremse ist weiterhin wirksam.

Fig. 4 zeigt den Stand der Technik. Der Druckluftvorratsbehälter 31 ist zwar gesetzlich nicht vorgeschrieben, wird aber aus Sicherheitsgründen bei Lkw's, die für Anhängerbetrieb vorgesehen sind, immer eingebaut. Der Behälter 31 kann durch die Erfindung eingespart werden.

Das Mehrkreisschutzventil 33 trennt einen defekten Bremskreis von den intakten Bremskreisen. Weiterhin ist in der Anhängerversorgungsleitung 27 im Normalfall ein Druckbegrenzungsventil 32 eingebaut.

## Patentansprüche

1. Verfahren zur Bremsung eines Nutzfahfzeuges mit Anhänger oder Auflieger, wobei das Zugfahrzeug mindestens zwei Bremskreise (17",18") und je Bremskreis einen Druckluftvorratsbehälter (15,16) zuf Bremsung des Zugfahrzeuges und einen Steuer-/Befüllungskreis zur Steuerung und Befüllung der Anhänger- oder Aufliegerbremsanlage aufweist, mit einem Mehrkreisschutzventil (13), das ab einem bestimmten unteren Druck in den Druckluftvorratsbehältem die Bremskreise und den Steuer-/Befüllungskreis für die Anhänger-/Aufliegerbremse schließt, mit einem elektronischen/pneumatischen Bremswertgeber und einer elektronischen Bremssteuerung (12) oder einem Bordrechner (28), **dadurch gekennzeichnet, dass** ein steuerbares Mehrkreisschutzventil (13) für die Zeit eines Bremsvorganges, oder bei einer länger andauernden Bremsung einen einstellbaren zeitlichen Anteil des Bremsvorganges, durch Signale von einer elektronischen Bremssteuerung (12) oder von einem Bordrechner (28), auch unterhalb des eingestellten Schließdruckes seine Ventile (38) intakter Bremskreise (17", 18") öffnet und den Steuer- und Versorgungskreis (27, 27', 26) der Anhänger- oder Aufliegerbremsanlage (20) mit Druckluft aus mindestens einem der Druckluftvorratsbehälter (15, 16) versorgt.

2. Vorrichtung zur Bremsung eines Nutzfahrzeuges mit Anhänger oder Auflieger, wobei das Zugfahrzeug mindestens zwei Bremskreise (17",18") und je Bremskreis einen Druckluftvorratsbehälter (15,16) zur Bremsung des Zugfahrzeuges und einen Steuer-/Befüllungskreis zur Steuerung und Befüllung der Anhänger- oder Aufliegerbremsanlage aufweist, mit einem Mehrkreisschutzventil (13), das ab einem bestimmten unteren Druck in den Druckluftvorratsbehältern die Bremskreise und den Steuer-/Befüllungskreis für die Anhänger-/Aufliegerbremse schließt, mit einem elektronischen/pneumatischen Bremswertgeber und einer elektronischen Bremssteuerung (12) oder einem Bordrechner (28), **dadurch gekennzeichnet, dass** das Mehrkreisschutzventil (13) ein elektronisch oder pneumatisch steuerbares Mehrkreisschutzventil (13) ist, das eine Steuereinheit (13') aufweist, mit der, mittels Signalen aus der elektronischen Bremssteuerung (12) oder dem Bordrechner (28), die Ventile (38) im Mehrkreisschutzventil (13) steuerbar sind.

3. Vorrichtung nach Anspruch 2, **dadurch gekennzeichnet, dass** bei einem Bremsvorgang das Mehrkreisschutzventil (13) auch unterhalb des Schließdruckes seine Ventile (38) der intakten Bremskreise (17", 18") der Betriebsbremsanlage (10) öffnet, bei einer länger andauernden Bremsung einen einstellbaren zeitlichen Anteil des Bremsvorganges und über einen Verbindungskanal (14) Druckluft aus mindestens einem der Druckluftvorratsbehälter (15, 16) in den Steuer- und Versorgungskreis (27, 27', 26) der Anhänger-/Aufliegerbremse leitet.

4. Vorrichtung nach den Anspruch 2, **dadurch gekennzeichnet, dass**, wenn ein defekter Bremskreis (17", 18") oder Steuer- und Versorgungskreis (27, 27', 26) vorliegt, das Ventil (38) des entsprechenden Kreises (17", 18", 27, 27', 26) im Mehrkreisschutzventil (13) bei einem Bremsvorgang nicht geöffnet wird.

## Claims

1. Procedure for braking a commercial vehicle with trailer or semitrailer, the tractor vehicle being equipped with at least two brake circuits (17", 18") and with a compressed-air reservoir (15, 16) for each of the brake circuits (17", 18") for braking the tractor vehicle and with a control/filler circuit for controlling and filling the trailer or semitrailer brake system, with a multiple-circuit protection valve (13), which from a certain lower pressure in the compressed-air reservoirs onwards closes the brake circuits and the control/filler circuit for the trailer/semitrailer brake, with an electronic/pneumatic braking value transmitter and an electronic brake control unit (12) or an on-board computer (28), **characterised in that** even below the set closing pressure a controllable multiple-circuit protection valve (13) opens its valves (38) for the intact brake circuits (17", 18") for the duration of a braking action or, in the event of a prolonged deceleration, for an adjustable temporal proportion of the braking action by means of signals from an electronic brake control unit (12) or from an on-borad computer (28) and supplies the control and supply circuit (27, 27', 26) of the trailer or semitrailer brake system (20) with compressed air from at least one of the compressed-air reservoirs (15, 16).

2. Device for braking a commercial vehicle with trailer or semitrailer, the tractor vehicle being equipped with at least two brake circuits (17", 18") and with a compressed-air reservoir (15, 16) for each of the brake circuits (17", 18") for braking the tractor vehicle and with a control/filler circuit for controlling and filling the trailer and semitrailer brake system, with a multiple-circuit protection valve (13) which from a certain lower pressure in the compressed-air reservoirs onwards closes the brake circuits and the control/filler circuit for the trailer/semitrailer brake, with an electronic/pneumatic braking value transmitter and an electronic brake control unit (12) or an on-board computer (28), **characterised in that** the multiple-circuit protection valve (13) is an electronically or pneumatically controllable multiple-circuit protection valve (13) which has a control unit (13') with which the valves (38) in the multiple-circuit protection valve (13) can be controlled by means of signals from the electronic brake control unit (12) or the on-board computer (28).

3. Device according to the Claim 2, **characterised in that** during a braking action the multiple-circuit protection valve (13) opens its valves (38) for the intact brake circuits (17", 18") of the service brake system (10) even below the closing pressure and, in the event of a prolonged deceleration, feeds an adjustable, temporal proportion of the braking action and, via a supply duct (14), compressed air from at least one of the compressed-air reservoirs (15, 16) into the control and supply circuit (27, 27', 26) of the trailer/semitrailer brake.

4. Device according to the Claim 2, **characterised in that** if a brake circuit (17", 18") or a control and supply circuit (27, 27', 26) is defective the valve (38) for the corresponding circuit (17", 18", 27, 27', 26) in the multiple-circuit protection valve (13) does not open during a braking action.

## Revendications

1. Procédé pour freiner un véhicule industriel avec remorque ou semi-remorque, auquel cas le véhicule tracteur présente au minimum deux circuits de freinage (17", 18") et, pour chaque circuit de freinage, un réservoir d'air comprimé (15, 16) pour assurer le freinage du véhicule tracteur et un circuit de commande/remplissage pour commander et remplir le circuit de freinage de la remorque ou de la semi-remorque, avec une valve de sécurité multicircuits (13) qui ferme les circuits de freinage et le circuit de commande/remplissage du frein de la remorque/semi-remorque à partir d'une certaine pression inférieure dans les réservoirs d'air, avec un transmetteur électronique/pneumatique de valeurs de freinage et une commande électronique de freinage (12) ou un ordinateur embarqué (28), **caractérisé par le fait qu'**une valve de sécurité multicircuits (13) commandable ouvre, y compris lorsque la pression est inférieure à la pression de fermeture définie, ses valves (38) des circuits de freinage intacts (17", 18") pendant le temps d'un freinage ou lors d'un freinage de durée plus longue pendant une période de temps paramétrable du freinage suite à l'émission de signaux par une commande électronique de freinage (12) ou par un ordinateur embarqué (28) et alimente en air comprimé le circuit de commande et d'alimentation (27, 27', 26) du circuit de freinage de la remorque ou de la semi-remorque (20) à partir d'au minimum un des réservoirs d'air comprimé (15, 16).

2. Dispositif de freinage d'un véhicule industriel avec remorque ou semi-remorque, auquel cas le véhicule tracteur présente au minimum deux circuits de freinage (17", 18") et, pour chaque circuit de freinage, un réservoir d'air comprimé (15, 16) pour assurer le freinage du véhicule tracteur et un circuit de commande/remplissage pour commander et remplir le circuit de freinage de la remorque ou de la semi-remorque, avec une valve de sécurité multicircuits (13) qui ferme les circuits de freinage et le circuit de commande/remplissage du frein de la remorque/semi-remorque à partir d'une certaine pression basse dans les réservoirs d'air, avec un transmetteur électronique/pneumatique de valeurs de freinage et une commande électronique de freinage (12) ou un ordinateur embarqué (28), **caractérisé par le fait qu'**une valve de sécurité multicircuits (13) est une valve de sécurité multicircuits (13) commandable électroniquement ou pneumatiquement, qui présente une unité de commande (13') par laquelle les valves (38) sont commandables dans la valve de sécurité multicircuits (13) au moyen de signaux émis par la commande électronique de freinage (12) ou l'ordinateur embarqué (28).

3. Dispositif de freinage selon la revendication 2, **caractérisé par le fait que**, lors d'un freinage, la valve de sécurité multicircuits (13) ouvre ses valves (38) des circuits de freinage intacts (17", 18") du circuit de freinage de service (10) même lorsque la pression est inférieure à la pression de fermeture et, lors d'un freinage à durée plus longue pendant une période de temps paramétrable du freinage, achemine l'air comprimé à partir d'au minimum un des réservoirs d'air (15, 16) dans le circuit de commande et d'alimentation (27, 27', 26) du frein de la remorque/semi-remorque par l'intermédiaire d'un conduit de raccordement (14).

4. Dispositif selon la revendication 2, **caractérisé par le fait que**, si une panne survient au niveau du circuit de freinage (17", 18") ou du circuit de commande et d'alimentation (27, 27', 26), la valve du circuit correspondant (17", 18", 27, 27', 26) logée dans la valve de sécurité multicircuits (13) ne s'ouvrira pas lors d'un freinage.
